# EUROPÄISCHE PATENTSCHRIFT

(11) **EP 1 340 056 B1**
(45) Veröffentlichungstag und Bekanntmachung des Hinweises auf die Patenterteilung: **15.10.2014**
(21) Anmeldenummer: 01998796.5
(22) Anmeldetag: 17.11.2001
(51) Int. Cl.: G01F 1/684, G01F 15/12

(54) **LUFTSTROMMESSER MIT VORRICHTUNG ZUR ABSCHEIDUNG VON FREMDPARTIKELN**
DEVICE FOR MEASURING AIR FLOW, COMPRISING A DEVICE FOR SEPARATING FOREIGN PARTICLES
DEBITMETRE COMPRENANT UN DISPOSITIF DE SEPARATION DE PARTICULES ETRANGERES

(30) Priorität: 30.11.2000 DE 10059421
(43) Veröffentlichungstag der Anmeldung: 03.09.2003
(73) Patentinhaber: ROBERT BOSCH GMBH, 70442 Stuttgart (DE)
(72) Erfinder: LENZING, Thomas, 71726 Benningen (DE); KONZELMANN, Uwe, 71679 Asperg (DE); JOSCHKO, Richard, 70499 Stuttgart (DE)
(86) Internationale Anmeldenummer: PCT/DE2001/004339
(87) Internationale Veröffentlichungsnummer: WO 2002/044666

(56) Entgegenhaltungen:
- EP-A- 1 091 195
- DE-A- 19 800 573
- DE-A- 19 815 654
- PATENT ABSTRACTS OF JAPAN vol. 1999, no. 11, 30. September 1999 (1999-09-30) -& JP 11 166720 A (GASTAR CORP), 22. Juni 1999 (1999-06-22)

## Beschreibung

### Stand der Technik

Die Erfindung geht aus von einer Vorrichtung zur Bestimmung zumindest eines Parameters eines strömenden Mediums nach der Gattung des Anspruchs 1.

Aus der DE 41 06 842 A1 ist ein Hitzdrahtsensor zur Gasvolumenstrommessung bekannt, der in einem Bypasskanal angeordnet ist, bei dem strömungsabwärts der Öffnung des Bypasskanals eine Wandfläche vorhanden ist, die parallel zur Öffnung des Bypasskanals verläuft. Der Sensor ist jedoch nicht in einem abgeschatteten Bereich des Bypasskanals angeordnet, so dass er nicht vor Verschmutzungen geschützt ist.

Aus der EP 803 712 A2 ist ein Luftstrommesser bekannt, der eine Trennstelle oder eine Trennwand im Bypasskanal aufweist. Ausserdem gibt es im Bypasskanal eine Wand, die parallel zur Eintrittsöffnung des Bypasskanals ist und auch diese Öffnung vollständig abdeckt. Der Sensor ist jedoch nicht vor einströmenden Flüssigkeiten geschützt.

Aus der DE 198 15 654 A1 ist eine Messvorrichtung zum Messen der Masse eines in der Leitung strömenden Mediums bekannt, bei der im Bypasskanal eine Trennstelle oder eine Trennwand vorhanden ist, die das Messelement vor Festkörperpartikeln und sonstigen Verunreinigungen schützen soll. Jedoch kommt es aufgrund von Reflektionen der Festkörperpartikel, die im Bypasskanal auf eine Innenwand treffen, dazu, dass diese in den Messkanal reflektiert werden und dort auf das Messelement treffen können.
Es wird kein Hinweis gegeben, dass man aufgrund des Reflexionsgesetzes die Reflektionen von Festkörperpartikeln durch eine Veränderung der Innenwand beeinflussen kann.

Durch eine Veröffentlichung ist eine Bypassgeometrie bekannt, bei der im Bypasskanal eine Trennwand vorhanden ist, die sich parallel in Strömungsrichtung erstreckt und eine Wandfläche vorhanden ist, die parallel zur Eintrittsöffnung des Bypasskanals verläuft. Die Wandfläche liegt strömungsabwärts des Messelements.
Das Messelement ist dabei durch die Trennwand und eine tieferliegende Eintrittsöffnung von dem Hauptstrom geschützt.
Der unterschiedliche Verlauf von Hauptkanal und Messkanal führt zu einem erhöhten Signalrauschen. Bei Rückströmungen können Flüssigkeit, Partikel und Öl direkt in den Messkanal gelangen und können das Messelement verschmutzen oder zerstören.

Aus der JP-11 166 720 ist ein weiterer Luftstrommesser bekannt, der eine Trennstelle oder eine Trennwand in Bypasskanal aufweist.

### Vorteile der Erfindung

Die erfindungsgemässe Vorrichtung mit den Merkmalen des Anspruchs 1 hat demgegenüber den Vorteil, dass auf einfache Art und Weise das zumindest eine Messelement vor Beaufschlagung mit Flüssigkeiten und Partikeln geschützt ist.

Durch die in den abhängigen Ansprüchen aufgeführten Massnahmen sind vorteilhafte Weiterbildungen und Verbesserungen der im Anspruch 1 genannten Vorrichtung möglich.

Es ist vorteilhaft, wenn die Eintrittsöffnung des Bypasskanals eine Abrisskante für Flüssigkeiten hat, weil sich dadurch kein Flüssigkeitswandfilm mehr im Bypasskanal im Bereich der Eintrittsöffnung bilden kann, der eventuell zum Messelement gelangen kann.

Die Trennwand hat vorteilhafter Weise wenigstens einen Abschnitt mit einer U-Form, um auf diese Weise den Sensor sowohl bei Vor- als auch bei Rückströmung entsprechend zu schützen.

### Zeichnung

Ausführungsbeispiele der Erfindung sind in der Zeichnung vereinfacht dargestellt und in der nachfolgenden Beschreibung näher erläutert.

Es zeigen
Figur 1 eine Vorrichtung zur Bestimmung zumindest eines Parameters eines strömenden Mediums im eingebauten Zustand,
Figur 2a, 2b und 2d einen Bypasskanal in einem Messgehäuse der erfindungsgemässen Vorrichtung,
Figur 2c einen Bypasskanal in einem Messgehäuse, der nicht Teil der erfindungsgemäßen Vorrichtung ist.

### Beschreibung des Ausführungsbeispiels

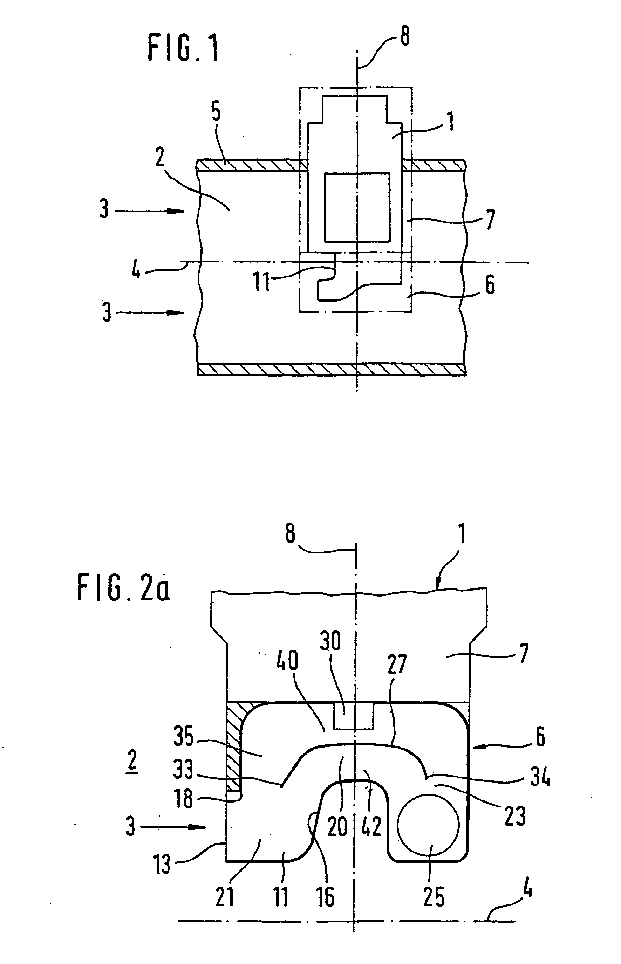

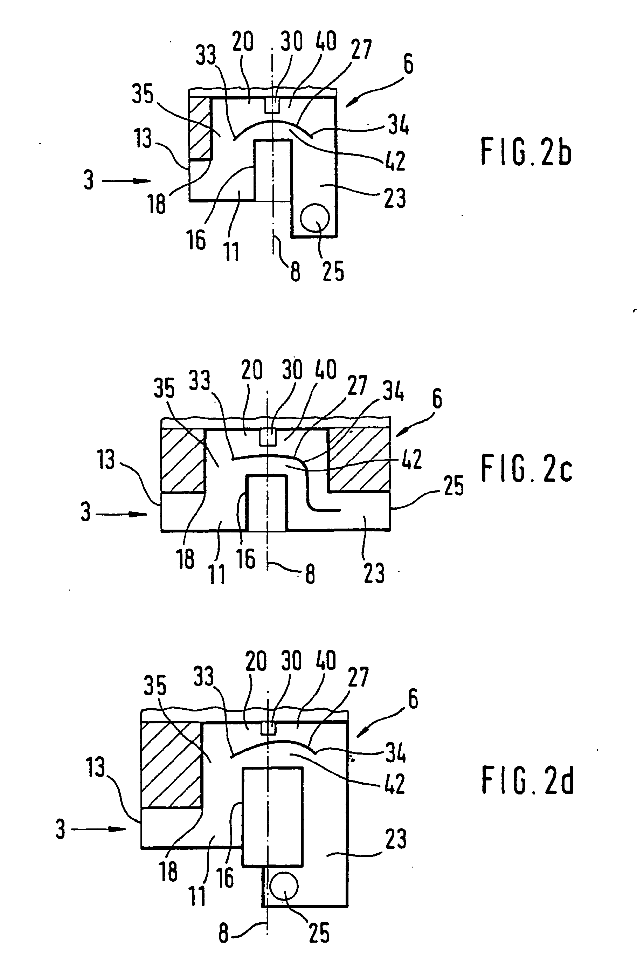

In Figur 1 ist schematisch gezeigt, wie eine Vorrichtung 1 in einer Leitung 2, in der das zu messende Medium strömt, eingebaut ist.
Die Vorrichtung 1 zur Bestimmung zumindest eines Parameters besteht aus einem Messgehäuse 6, gekennzeichnet durch ein unteres strichpunktiert gezeichnetes Rechteck und einem Trägerteil 7, gekennzeichnet durch ein oberes strichpunktiert gezeichnetes Rechteck, in dem z. B. eine Auswerteelektronik untergebracht ist. In diesem Ausführungsbeispiel der Vorrichtung 1 wird ein Messelement 30 (Fig. 2) verwendet, das beispielsweise den Volumenstrom des strömenden Mediums bestimmt. Weitere Parameter, die gemessen werden können, sind beispielsweise der Druck, die Temperatur, eine Konzentration eines Mediumbestandteils oder eine Strömungsgeschwindigkeit, die mittels geeigneter Sensoren bestimmt werden.
Das Messgehäuse 6 und das Trägerteil 7 haben bspw. eine gemeinsame Längsachse 8, die in Einbaurichtung verläuft und die z. B. auch die Mittelachse sein kann. Die Vorrichtung 1 ist in eine Wandung 5 der Leitung 2 beispielsweise steckbar eingeführt. Die Wandung 5 begrenzt einen Strömungsquerschnitt der Leitung 2, in dessen Mitte sich in Richtung des strömenden Mediums parallel zur Wandung 5 eine Mittelachse 4 erstreckt. Die Richtung des strömenden Mediums, im Folgenden als Hauptströmungsrichtung bezeichnet, ist durch entsprechende Pfeile 3 gekennzeichnet und verläuft dort von links nach rechts.

Figur 2a zeigt das Messgehäuse 6 mit dem Bypasskanal 11. Der Bypasskanal 11 hat eine Eintrittsöffnung 13, durch die das Medium in den Bypasskanal 11 strömt. Strömungsabwärts der Eintrittsöffnung 13 und strömungsaufwärts des Messelements 30 ist eine Innenwandfläche 16 vorhanden, die ungefähr parallel zur Eintrittsöffnung 13 verläuft und auf die in Hauptströmungsrichtung 3 eintretende Partikel wie Festkörperpartikel und Flüssigkeitsteilchen frontal, d.h. senkrecht, auftreffen. Eine Projektion der Eintrittsöffnung 13 ist vollständig auf der Innenwandfläche 16 abgebildet.
Die Eintrittsöffnung 13 wird oben von einer Abrisskante 18 begrenzt, so dass sich dort an der Bypasskanalwand kein Flüssigkeitswandfilm bildet, der zum Messelement 30 gelangen kann.
Nach der Eintrittsöffnung 13 beginnt als Abschnitt des Bypasskanals 11 ein Einlasskanal 21. Danach macht der Bypasskanal 11 beispielsweise einen Knick um etwa 90 Grad zum Trägerteil 7 hin, verläuft dann in einem Mittelteil 20 ungefähr parallel zur Strömungsrichtung 3 und macht dann beispielsweise einen Knick um 90 Grad nach unten, d.h. vom Trägerteil 7 weg, zur Bildung eines sogenannten Auslasskanals 23, um dann durch eine Austrittsöffnung 25 das Messgehäuse 6 wieder zu verlassen. Der Bypasskanal 11 hat also bspw. wenigstens einen Abschnitt in U-Form.
Die Austrittsöffnung 25 kann seitlich des Messgehäuses 6 vorhanden sein, oder sie ist so ausgebildet, dass das Medium in Strömungsrichtung 3 oder senkrecht zur Strömungsrichtung 3 nach unten den Bypasskanal 11 wieder verlässt.

Im Mittelteil 20 ist das Messelement 30 angeordnet. Das Messelement 30 ragt zum Teil in das Trägerteil 7 hinein. Unterhalb des Messelements 30 und des Trägerteils 7 ist im Mittelteil 20 eine senkrecht zur Zeichenebene verlaufende Trennwand 27 vorhanden, die beispielsweise eine U-Form hat, die dem Verlauf des Bypasskanals 11 angepasst ist. Die Trennwand 27 beginnt strömungsaufwärts an einer Trennstelle 33, die in einem abgeschatteten Bereich 35 liegt. Der abgeschattete Bereich 35 ist der Teil des Bypasskanals 11, der von einer zur Strömungsrichtung 3 senkrechten Projektion der Eintrittsöffnung 13 nicht erfasst ist, d.h. Teilchen, die parallel zur Strömungsrichtung 3 in den Bypasskanal 11 eintreten, müssen erst umgelenkt werden, um in den abgeschatteten Bereich 35 zu gelangen.
Die vollständig oder nahezu vollständig von einer Wandseite zur anderen Wandseite des Bypasskanals 11 sich erstreckende Trennwand 27 teilt den Bypasskanal 11 in zwei Kanäle, einen Messkanal 40 mit dem Messelement 30 und den in einer geodätischen Höhe darunter liegenden Umgehungskanal 42 auf. Der Messkanal 40 umfasst bspw. Teile des Einlasskanals 21 und Auslasskanals 23.
Strömungsabwärts des Messelements 30 vereinigen sich der Messkanal 40 und der Umgehungskanal 42 wieder. Dies kann auch unmittelbar vor der Austrittsöffnung 25 erfolgen.

Eine axiale Anordnung der Innenwandfläche 16 liegt in Strömungsrichtung 3 zwischen der Trennstelle 33, dem strömungsaufwärtigen Anfang der Trennwand 27 und einem strömungsabwärtigen Ende 34 der Trennwand 27.

Wenn das strömende Medium in der Leitung 2 Flüssigkeitsteilchen enthält und diese in den Bypasskanal 11 strömen, so bildet sich aufgrund der Abrisskante 18 kein Flüssigkeitswandfilm, der in Richtung des Messelements 30 gelangen kann. Strömungsabwärts der Eintrittsöffnung 13 treffen die Flüssigkeitsteilchen auf die Innenwandfläche 16 und bilden dort einen Wandfilm, der sich durch den Umgehungskanal 42 in Richtung Austrittsöffnung 25 bewegt.
Auch Festkörperpartikel gelangen aufgrund ihrer Trägheit nicht in den Messkanal 40. Festkörperpartikel wie zum Beispiel Staubteilchen, treffen frontal, d.h. senkrecht, auf die Innenwandfläche 16 und werden dort zurückreflektiert und verlassen den Bypasskanal 11 wieder durch die Eintrittsöffnung 13, bzw. werden in den Umgehungskanal 42 durch die Strömung mitgerissen. Der Umgehungskanal 42 ist so ausgebildet und so breit, dass auch bei hohem Flüssigkeitseintrag kein Kapillareffekt auftritt.

Durch die beschriebenen Effekte ergibt sich der Vorteil, dass stromabwärts der Eintrittsöffnung 13 ein von Flüssigkeitströpfchen und Festkörperpartikeln freier Teil des Mediums in Richtung nach oben zum Trägerteil 7 abgelenkt wird und über den Messkanal 40 und das Messelement 30 strömt, während durch die Abtrennung mittels der Trennwand 27 der mit Flüssigkeit und Festkörperpartikeln behaftete Teil des Mediums über den darunterliegenden Umgehungskanal 42 daran vorbeigeleitet wird.

Figur 2b zeigt eine weitere Gestaltungsmöglichkeit des Bypasskanals 11, der im wesentlichen ungefähr im Bereich des Mittelteils 20 einer U-Form entspricht. Die Austrittsöffnung 25 liegt im Vergleich zu Figur 2a unterhalb der Eintrittsöffnung 13, d.h. der Abstand der Austrittsöffnung 25 in Richtung der Mittelachse 4 zum Messelement 30 ist grösser als der der Eintrittsöffnung 13.
Die Austrittsöffnung 25 kann auch nach unten geöffnet sein, d.h. das strömende Medium verlässt den Bypasskanal 11 senkrecht zur Strömungsrichtung 3.
Die Trennwand 27 erstreckt sich bspw. nur im Messkanal 40 und hat eine U-Form.

Bei Figur 2c ist im Gegensatz zur Figur 2a die Austrittsöffnung 25 parallel zur Eintrittsöffnung 13 angeordnet, d.h. das strömende Medium verlässt den Bypasskanal 11 in Strömungsrichtung 3.
Die Trennwand 27 erstreckt sich im Messkanal 40 bis zum Auslasskanal 23 und bspw. eine S-Form.

Bei Figur 2d macht der Austrittskanal 23 ausgehend vom Ende des Austrittskanal 23 von Figur 2b noch einen Knick entgegen der Strömungsrichtung 3, bspw. um 90°, so dass er, eine weitere U-Form bildend, zumindest teilweise entgegen der Strömungsrichtung 3 verläuft. Die Austrittsöffnung 25 kann so gestaltet sein, dass das strömende Medium den Bypasskanal 11 senkrecht (Fig. 2d) oder entgegen der Strömungsrichtung 3 verlässt.

Die Gestaltungsmöglichkeiten des Bypasskanals 11 werden je nach Anforderungen an die Vorrichtung 1, wie z.B. Pulsationsverhalten, Rückströmungen, usw., ausgewählt.

## Patentansprüche

1. Vorrichtung zur Bestimmung zumindest eines Parameters eines in der Leitung in einer Hauptströmungsrichtung strömenden Mediums, insbesondere der Ansaugluftmasse einer Brennkraftmaschine, mit einem sich entlang einer Längsachse erstreckenden Messgehäuse und mit zumindest einem Messelement, mit einem Bypasskanal im Messgehäuse, der sich zwischen einer mit der Leitung verbundenen Eintrittsöffnung, deren Öffnungsquerschnitt senkrecht zur Hauptströmungsrichtung orientiert ist, und zumindest einer strömungsabwärts der Eintrittsöffnung in die Leitung mündenden Austrittsöffnung entlang einer Strömungsrichtung erstreckt, wobei der Bypasskanal zwischen der Eintrittsöffnung und dem Messelement zumindest eine Trennstelle aufweist, die den Bypasskanal in einen Messkanal, in welchem das zumindest eine Messelement angeordnet ist, und in einen Umgehungskanal, welcher das Messelement in der Strömungsrichtung umgeht, aufteilt und wobei strömungsabwärts der Eintrittsöffnung in dem Bypasskanal (11) eine Innenwandfläche (16) vorhanden ist, die ungefähr parallel zum Öffnungsquerschnitt der Eintrittsöffnung (13) verläuft, und die eine Projektion der Eintrittsöffnung (13) in Strömungsrichtung (3) vollständig abdeckt, und die Trennstelle (33) außerhalb dieser Projektion liegend durch eine Trennwand (27) gebildet ist, und die Innenwandfläche (16) zwischen der Trennstelle (33), dem strömungsaufwärtigen Anfang der Trennwand (27) und einem strömungsabwärtigen Ende (34) der Trennwand (27) angeordnet ist,
**dadurch gekennzeichnet, dass** das Messelement vom Medium umströmt wird und dass die Austrittsöffnung (25) des Bypasskanals (11) so angeordnet ist, dass das Medium quer zur Hauptströmungsrichtung (3) und quer zur Längsachse (8) des Messgehäuses (6) aus dem Bypasskanal (11) austritt.

2. Vorrichtung nach Anspruch 1,
**dadurch gekennzeichnet, dass**
die Trennwand (27) zumindest eine U-Form hat.

3. Vorrichtung nach Anspruch 1,
**dadurch gekennzeichnet, dass**
die Eintrittsöffnung (13) eine Abrisskante (18) aufweist, welche die Eintrittsöffnung begrenz, so dass sich an der Bypasskanalwand kein Flüssigkeitswandfilm bilden kann, der zum Messelement gelangt.

4. Vorrichtung nach Anspruch 1,
**dadurch gekennzeichnet, dass**
der Bypasskanal (11) wenigstens einen Abschnitt in U-Form aufweist.

## Claims

1. Device for determining at least one parameter of a medium flowing in the line in a main flow direction, in particular of the intake air mass of an internal combustion engine, with a measuring housing which extends along a longitudinal axis and with at least one measuring element, with a bypass duct in the measuring housing which extends along a flow direction between an inlet orifice, which is connected to the line and the orifice cross section of which is oriented perpendicularly to the main flow direction, and at least one outlet orifice issuing into the line downstream of the inlet orifice, the bypass duct having, between the inlet orifice and the measuring element, at least one separating point which divides the bypass duct into a measuring duct, in which the at least one measuring element is arranged, and into a detour duct, which detours the measuring element in the flow direction, and, downstream of the inlet orifice, there being, in the bypass duct (11), an inner wall surface (16) which runs approximately parallel to the orifice cross section of the inlet orifice (13) and which completely covers a projection of the inlet orifice (13) in the flow direction (3), and the separating point (33), lying outside this projection, being formed by a partition (27), and the inner wall surface (16) being arranged between the separating point (33), the upstream start of the partition (27) and a downstream end (34) of the partition (27), **characterized in that** the medium flows around the measuring element, and **in that** the outlet orifice (25) of the bypass duct (11) is arranged such that the medium exits from the bypass duct (11) transversely with respect to the main flow direction (3) and transversely with respect to the longitudinal axis (8) of the measuring housing (6).

2. Device according to Claim 1, **characterized in that** the partition (27) has at least one U-shape.

3. Device according to Claim 1, **characterized in that** the inlet orifice (13) has a breakaway edge (18) which delimits the inlet orifice, such that a liquid wall film that passes to the measuring element cannot form at the bypass duct wall.

4. Device according to Claim 1, **characterized in that** the bypass duct (11) has at least one U-shaped portion.

## Revendications

1. Dispositif pour déterminer au moins un paramètre d'un fluide, en particulier la masse d'air d'admission d'un moteur à combustion interne, s'écoulant dans une conduite dans une direction d'écoulement principale, comprenant un boîtier de mesure s'étendant le long d'un axe longitudinal et au moins un élément de mesure, un canal de dérivation dans le boîtier de mesure, lequel s'étend le long d'une direction d'écoulement entre une ouverture d'entrée connectée à la conduite, dont la section transversale d'ouverture est orientée perpendiculairement à la direction d'écoulement principale, et au moins une ouverture de sortie débouchant dans la conduite en aval de l'écoulement de l'ouverture d'entrée, le canal de dérivation présentant, entre l'ouverture d'entrée et l'élément de mesure, au moins un point de séparation qui divise le canal de dérivation en un canal de mesure dans lequel est disposé l'au moins un élément de mesure et en un canal de contournement qui contourne l'élément de mesure dans la direction d'écoulement, et une surface de paroi interne (16) étant prévue en aval de l'écoulement de l'ouverture d'entrée dans le canal de dérivation (11), laquelle s'étend approximativement parallèlement à la section transversale d'ouverture de l'ouverture d'entrée (13) et recouvre complètement une projection de l'ouverture d'entrée (13) dans la direction d'écoulement (3), et le point de séparation (33), situé à l'extérieur de cette projection, étant formé par une paroi de séparation (27), et la surface de paroi interne (16) étant disposée entre le point de séparation (33), le début en amont de l'écoulement de la paroi de séparation (27) et une extrémité en aval de l'écoulement (34) de la paroi de séparation (27),
**caractérisé en ce que** l'élément de mesure est entouré par la circulation du fluide et **en ce que** l'ouverture de sortie (25) du canal de dérivation (11) est disposée de telle sorte que le fluide sorte transversalement à la direction d'écoulement principale (3) et transversalement à l'axe longitudinal (8) du boîtier de mesure (6) hors du canal de dérivation (11).

2. Dispositif selon la revendication 1,
**caractérisé en ce que**
la paroi de séparation (27) présente au moins une forme en U.

3. Dispositif selon la revendication 1,
**caractérisé en ce que**
l'ouverture d'entrée (13) présente un bord de rupture (18) qui limite l'ouverture d'entrée de telle sorte qu'il ne puisse se former au niveau de la paroi du canal de dérivation aucun film de paroi de liquide qui parvienne jusqu'à l'élément de mesure.

4. Dispositif selon la revendication 1,
**caractérisé en ce que**
le canal de dérivation (11) présente au moins une section en forme de U.
